# EUROPÄISCHE PATENTSCHRIFT

(11) **EP 2 539 396 B1**
(45) Veröffentlichungstag und Bekanntmachung des Hinweises auf die Patenterteilung: **30.08.2017**
(21) Anmeldenummer: 11704729.0
(22) Anmeldetag: 18.02.2011
(51) Int. Cl.: C08L 1/02

(54) **KOMPOSITZUSAMMENSETZUNG, VERFAHREN ZU DEREN HERSTELLUNG, FORMTEIL UND VERWENDUNG**
COMPOSITE COMPOSITION, METHOD FOR THE PRODUCTION THEREOF, MOULDED PART AND USE
OBJETS COMPOSITES, PIÈCES MOULÉES, LEUR FABRICATION ET UTILISATION

(30) Priorität: 22.02.2010 DE 102010008780
(43) Veröffentlichungstag der Anmeldung: 02.01.2013
(73) Patentinhaber: Fraunhofer-Gesellschaft zur Förderung der angewandten Forschung e.V., 80686 München (DE)
(72) Erfinder: ERDMANN, Jens, 13509 Berlin (DE); GANSTER, Johannes, 14469 Potsdam (DE)
(74) Vertreter: Pfenning, Meinig & Partner mbB
(86) Internationale Anmeldenummer: PCT/EP2011/000797
(87) Internationale Veröffentlichungsnummer: WO 2011/101163

(56) Entgegenhaltungen:
- EP-A1- 1 918 324
- WO-A1-00/21743
- WO-A1-2006/108256
- WO-A2-2004/044045
- WO-A2-2010/045414
- US-A1- 2006 025 526
- US-A1- 2006 084 729
- GASSAN J: "A study of fibre and interface parameters affecting the fatigue behaviour of natural fibre composites", COMPOSITES PART A: APPLIED SCIENCE AND MANUFACTURING, ELSEVIER SCIENCE PUBLISHERS B.V., AMSTERDAM, NL, Bd. 33, Nr. 3, 1. März 2002 (2002-03-01), Seiten 369-374, XP004332237, ISSN: 1359-835X, DOI: DOI:10.1016/S1359-835X(01)00116-6
- LIU L ET AL: "Mechanical properties of poly(butylene succinate) (PBS) biocomposites reinforced with surface modified jute fibre", COMPOSITES PART A: APPLIED SCIENCE AND MANUFACTURING, ELSEVIER SCIENCE PUBLISHERS B.V., AMSTERDAM, NL, Bd. 40, Nr. 5, 1. Mai 2009 (2009-05-01), Seiten 669-674, XP026022015, ISSN: 1359-835X, DOI: DOI:10.1016/J.COMPOSITESA.2009.03.002 [gefunden am 2009-04-22]
- M. S. HUDA ET AL: "Wood-fiber-reinforced poly(lactic acid) composites: Evaluation of the physicomechanical and morphological properties", JOURNAL OF APPLIED POLYMER SCIENCE, Bd. 102, Nr. 5, 1. Januar 2006 (2006-01-01), Seiten 4856-4869, XP55007642, ISSN: 0021-8995, DOI: 10.1002/app.24829

## Beschreibung

Die vorliegende Erfindung betrifft eine Kompositzusammensetzung, die in einer Matrix eines thermoplastischen Kunststoffes modifizierte Cellulosefasern beinhaltet. Die Cellulosefasern sind dabei mit einem an die Cellulose angebundenen Haftreduzierungsadditiv ausgerüstet. Dabei ist das Haftreduzierungsadditiv mit dem thermoplastischen Kunststoff der Matrix thermodynamisch unverträglich, d.h. das Haftreduzierungsadditiv als solches ist mit dem thermoplastischen Kunststoff der Matrix molekular unmischbar, wodurch die Bildung von topologische Verhakungen an der Faser-Matrix-Grenzfläche verhindert wird.

Auf Grund der kontinuierlich steigenden Erdölpreise sowie der unerschöpfbaren Verfügbarkeit von nachwachsenden Rohstoffen wecken Biopolymere bzw. Biowerkstoffe zunehmend großes Interesse in verschiedenen Industriezweigen. Technische Anwendungen in der Automobilindustrie für Biowerkstoffe zu erschließen und langfristig technische Polymerblends aus Polycarbonat und Acrylnitril-Butadien-Styrol (PC/ABS) oder kurzglasfaserverstärkte Polypropylene (PP/GF) zumindest teilweise zu substituieren, ist das erstrebenswerte Ziel der anwendungsorientierten Forschung. Als Basisbiopolymer steht Polymilchsäure (PLA) auf Grund der leichten Verarbeitbarkeit, des guten mechanischen Eigenschaftsprofils und der stark wachsenden Verfügbarkeit (expotentielles Wachstum) im Fokus des Interesses. Für den Einsatz im Fahrzeuginnen und -außenbereich sind jedoch gewisse Anforderungen an die einzusetzenden Materialien gestellt, die von nativen PLA jedoch nur unzureichend erfüllt werden. Daher konzentriert sich die anwendungsorientierte Forschung auf das Modifizieren von PLA mit dem Ziel einer gleichzeitig signifikanten Verbesserung von Festigkeit, Steifigkeit und Schlagzähigkeit, damit die gesetzten Standards im Automobilbau erfüllt werden können. Insbesondere die Schlagzähigkeit und die Tieftemperaturschlagzähigkeit (T < 0 °C) von PLA gilt es zu verbessern. Dahingehend gibt es einige Ansätze die zumindest zum Teil erfolgversprechend sind.
1. Das Blenden von PLA mit z.B. Polycaprolacton (PCL) oder aromatisch-aliphatischen Copolyestern ("Ecoflex" der Fa. BASF) führt zu verbesserten Schlagzähigkeiten, allerdings zu keiner Verbesserung der Steifigkeit und Festigkeit gegenüber nativen PLA (z.B. Jaszkiewitcz, in 13. Problemseminar "Polymermischungen" - "Polymerblends & Nanocomposites"; 2009).
2. Einsatz von kommerziellen Schlagzähmodifikatoren auf Basis von Ethylen-Maleinsäure-Glycidylmethacrylat (E-MA-GMA/"Biostrength 130, 150") oder Elastomeren (z.B. natural rubber) in PLA. Der Vorteil dieses Ansatzes besteht darin, dass die Schlagzähigkeit und auch die Tieftemperaturschlagzähigkeit der Blends außerordentlich hoch ist. Jedoch wird in Form des Modifikators ein nicht unerheblicher Anteil von Elastomer eingebracht, der zu einer Abnahme der Steifigkeit und der Festigkeit gegenüber nativen PLA führt (Forstner, Stadlbauer, in Recent Advances in Research on Biogradable Polymers and Sustainable Composites, 2008, S. 207-213; Proceedings 1st PLA World Congress, 2008).
3. Das Verstärken von PLA mit Naturfasern oder cellulosischen Synthesefasern (auf Basis nachwachsender Rohstoffe). Insbesondere letztere bewirken eine erhebliche Steigerung der Festigkeit, Steifigkeit und Schlagzähigkeit im Verbund. Die Tieftemperaturschlagzähigkeit (T < 0°C) dieser Verbunde reicht jedoch noch nicht an das Niveau von kurzglasfaserverstärkten Polypropylenverbunden oder PC/ABS-Blends heran. (WO 03/016011, WO 02/10272, WO 03/033227, Fink Ganster, Macromol. Symp. 244, 2006, S. 107-118).
4. Der Einsatz von funktionellen Additiven wie Weichmachern (z.B. Triacetin, Polyethylenglycol) oder Kettenverlängerern ("Joncryl" der Fa. BASF) in naturfaser- bzw. cellulosischen synthesefaserverstärkten PLA-Verbunden führt nur zu geringfügig verbesserten Schlagzähigkeiten (z B in Bledzki, Jaszkiewicz, Bioplastics Magazin 3, 2008, S.12-15; oder in K. Oksman, M. Skrifvars, J.-F. Seim; Composites Science and Technology 63, 2003, S. 1317-1324, oder in R. Masirek, Z. Kulinski, J. Appl. Polym. Sci. 105; 2007; S.255-268).

Bisher scheint das Problem der gleichzeitig signifikanten Verbesserung von Schlagzähigkeit, Tieftemperaturschlagzähigkeit (T < 0°C), Festigkeit und Steifigkeit von nativen PLA nicht ausreichend gelöst.

J. M. Felix et al. beschreiben in Journal of Applied Polymer Science, Vol. 50, 699-708 (1993) eine Kompositzusammensetzung, die eine Polypropylenmatrix sowie eine mit einem Maleinsäureanhydrid-gepfropften Polypropylen modifizierte Cellulosefaser beinhaltet. Aufgrund der gleichen Natur des zur Modifizierung der Cellulosefaser verwendeten Maleinsäure-gepfropften Polypropylens mit dem Matrixpolymer (ebenso Polypropylen) weisen die entsprechend modifizierten Cellulosefasern jedoch eine deutliche Affinität zum Matrixpolymer auf, so dass das zur Modifizierung der Cellulosefaser verwendete Additiv als Haftvermittler zwischen den Cellulosefasern und der Polypropylenmatrix wirkt. Insofern ist die hier beschriebene Kompositzusammensetzung zwar äußerst beständig, lässt jedoch auf Grund der erwähnten Effekte keine hohen Schlagzähigkeiten durch die Aktivierung der energiedissipierenden Mechanismen-Delamination und Faserauszug im Verbund zu.

Ausgehend hiervon war es daher Aufgabe der vorliegenden Erfindung, eine Kompositzusammensetzung bereitzustellen, die die oben angesprochenen Probleme umgeht. Ebenso war es Aufgabe der vorliegenden Erfindung, einen Formkörper aus einer derartigen Kompositzusammensetzung, sowie ein Verfahren zur Herstellung einer Kompositzusammensetzung anzugeben.

Diese Aufgabe wird bezüglich der Kompositzusammensetzung mit den Merkmalen des Patentanspruchs 1, bezüglich des Formteils aus der Kompositzusammensetzung mit den Merkmalen des Patentanspruchs 13 sowie hinsichtlich des Verfahrens zur Herstellung der Kompositzusammensetzung mit den Merkmalen des Patentanspruchs 14 gelöst. Mit Patentanspruch 15 werden Verwendungszwecke der Kompositzusammensetzung genannt.

Erfindungsgemäß wird somit eine Kompositzusammensetzung bereitgestellt, die
a) eine Matrix, enthaltend mindestens eine Sorte eines thermoplastischen Kunststoffes,
b) mindestens einen Verstärkungsstoff aus Cellulose, sowie
c) mindestens ein kovalent und/oder nebenvalent an die Cellulose angebundenes Haftreduzierungsadditiv,
enthält, wobei das Haftreduzierungsadditiv mit dem thermoplastischen Kunststoff der Matrix thermodynamisch unverträglich ist.

Der Kerngedanke der erfindungsgemäßen Lehre beruht darauf, dass das verwendete Haftreduzierungsadditiv als solches mit der polymeren Matrix thermodynamisch unverträglich ist, d.h. in einer Schmelze aus dem thermoplastischen Kunststoff der Matrix sowie des Haftreduzierungsadditives eine durchgehende Mischungslücke vorliegt. Der thermoplastische Kunststoff und das Haftreduzierungsadditiv sind somit molekular unmischbar. Somit wird die Bildung von topologischen Verhakungen (lasttragende Verschlaufungen von Makromolekülen bzw. "Entanglements") zwischen dem thermoplastischen Kunststoff der Matrix und dem Haftreduzierungsadditiv unmöglich. Dies gilt auch uneingeschränkt dann, wenn das Haftreduzierungsadditiv kovalent und/oder nebenvalent an die Cellulose angebunden ist. In diesem Fall werden die physikalischen und/oder chemischen Oberflächeneigenschaften der derart modifizierten Cellulose maßgeblich durch das angebundene Haftreduzierungsadditiv bestimmt, so dass sich die thermodynamische Unverträglichkeit des Haftreduzierungsadditives mit dem thermoplastischen Kunststoff der Matrix auch auf die Grenzfläche zwischen der modifizierten Cellulosefaser und dem thermoplastischen Kunststoff der Matrix überträgt.

Das Haftreduzierungsadditiv ist somit dadurch gekennzeichnet, dass es mit der polymeren Matrix thermodynamisch unverträglich (d.h. molekular unmischbar) ist und damit die Bildung topologischer Verhakungen an der Faser-Matrixgrenzfläche ausgeschlossen ist.

Das Haftreduzierungsadditiv wirkt nur dann als Haftreduzierer, wenn:
a) dieses zum einen an die Verstärkungsfaser gebunden ist und diese ummantelt, entweder kovalent (z.B. Esterbindungen) und/oder nebenvalent (z.B. Wasserstoffbrückenbindungen)
b) dieses nicht durch topologische Verhakungen an der Faser-Matrixgrenzfläche mit der polymeren Matrix interagiert. Dies ist gegeben, wenn das Haftreduzierungsadditiv mit der polymeren Matrix thermodynamisch unverträglich ist.

Wichtigstes Kriterium, dass beide Komponenten thermodynamisch unverträglich sind, beruht darauf, dass die Monomereinheiten der Makromoleküle der Matrix und die Monomereinheiten der Makromoleküle des Haftreduzierungsadditivs (genauer: die Monomereinheiten zwischen den MAH-Pfropfungsstellen) nicht identisch sind.

Beispielhafte Möglichkeiten für thermodynamisch unverträgliche bzw. verträgliche Kombinationen aus Haftreduzierungsadditiv und polymerer Matrix sind in folgenden Tabellen angegeben:

**Tabelle 1**

| **Verträglichkeit** | **Polymere Matrix** | **Haftreduzierungsadditiv** |
|---|---|---|
| Unverträglich | PLA | PP-g-MAH |
| Unverträglich | PLA | PE-g-MAH |
| Unverträglich | PLA | PS-g-MAH |
| Unverträglich | PLA | PCL-g-MAH |
| | | |
| Unverträglich | PP | PLA-g-MAH |
| Unverträglich | PP | PE-g-MAH |
| Unverträglich | PP | PS-g-MAH |
| Unverträglich | PP | PCL-g-MAH |
| | | |
| Unverträglich | PE | PLA-g-MAH |
| Unverträglich | PE | PP-g-MAH |
| Unverträglich | PE | PS-g-MAH |
| Unverträglich | PE | PCL-g-MAH |
| | | |
| Unverträglich | PS | PLA-g-MAH |
| Unverträglich | PS | PP-g-MAH |
| Unverträglich | PS | PE-g-MAH |
| Unverträglich | PS | PCL-g-MAH |
| | | |
| Unverträglich | PC | PLA-g-MAH |
| Unverträglich | PC | PP-g-MAH |
| Unverträglich | PC | PE-g-MAH |
| Unverträglich | PC | PS-g-MAH |
| Unverträglich | PC | PCL-g-MAH |
| | | |
| Unverträglich | PA | PLA-g-MAH |
| Unverträglich | PA | PP-g-MAH |
| Unverträglich | PA | PE-g-MAH |
| Unverträglich | PA | PS-g-MAH |
| Unverträglich | PA | PCL-g-MAH |

**Tabelle 2**

| **Verträglichkeit** | **Polymere Matrix** | **Haftreduzierungsadditiv** |
|---|---|---|
| Verträglich | PLA | PLA-g-MAH |
| Verträglich | PP | PP-g-MAH |
| Verträglich | PE | PE-g-MAH |
| Verträglich | PS | PS-g-MAH |
| Verträglich | PCL | PCL-g-MAH |

- PLA: Polylactid
- PP: Polypropylen
- PE: Polyethylen
- PS: Polystyrol
- PCL: Polycaprolacton
- PC: Polycarbonat
- PA: Polyamid

In diesem Sinne heben sich die erfindungsgemäßen Kompositzusammensetzungen von der in J. M. Felix et al. (Journal of Applied Polymer Science, Vol. 50, S. 699-708 (1993)) beschriebenen Kompositzusammensetzung ab, welche eine Polypropylenmatrix sowie eine mit einem Maleinsäureanhydrid-gepfropften Polypropylen modifizierte Cellulosefaser beinhaltet.

Die vorliegende Erfindung knüpft somit an den oben genannten dritten Lösungsansatz an und betrifft insbesondere ein Verfahren und eine Rezeptur zur Herstellung eines Biowerkstoffes z.B. aus PLA und Celluloseregeneratfasern (CF) deren ohnehin schon hohes Eigenschaftsniveau durch Fasermodifizierung (Hydrophobierung) bezüglich Schlagzähigkeit, Tieftemperaturschlagzähigkeit (T < 0°C) und Wasseraufnahmebeständigkeit in erheblichen Maße weiter verbessert werden kann. Darüberhinaus sind die erfindungsgemäßen Verbunde über konventionelle Verarbeitungstechnologien (Extrusion, Spritzguss) verarbeitbar und die Übertragung in eine industrielle Prozesskette problemlos möglich.

Entgegen der weitläufigen Vorstellungen in der Fachwelt und den bekannten Theorien zur Wirkung einer Haftvermittlung in faserverstärkten Verbunden kann eine enorme Schlagzähigkeitssteigerung durch Haftreduzierung, insbesondere in PLA-Cellulosefaserverbunden, realisiert werden. Im einfachsten Fall kann dies durch den Verzicht eines Haftvermittlers bei der Verbundherstellung realisiert werden, wobei die dadurch erzielten Materialeigenschaften jedoch weit unter denen liegen, wie sie mit der erfindungsgemäßen Kompositzusammensetzung erzielt werden können. In PLA-Cellulosefaserverbunden ohne Haftvermittler liegt jedoch auf Grund von Wasserstoffbrückenbindungen (Nebenvalenzkräfte) zwischen den Hydroxyl- bzw. Carboxyl- und Carbonylgruppen des PLA und den Hydroxylgruppen der Cellulosefaseroberfläche naturgegeben eine partielle Faser-Matrix-Haftung vor. Diese ist ebenso zu beobachten, wenn eine thermodynamische Kompatibilität der eingesetzten Matrixpolymere und der verwendeten Haftvermittler gegeben ist (siehe Diskussion eingangs zu J.M. Felix et al.). Im Sinne der Erfindung ist diese jedoch unerwünscht. Anzustreben ist eine überwiegend vollständige Aufhebung aller physikalischen Interaktionskräfte (Haupt- und Nebenvalenzkräfte) zwischen der PLA-Matrix und den mit dem Haftreduzierungsadditiv modifizierten Cellulosefasern, bei Beanspruchung des Verbundes über den elastischen Deformationsbereich hinaus.

Diese angestrebte vollständige Faser-Matrix-Inkompatibilität kann bei der vorliegenden Erfindung durch den Zusatz des erfindungsgemäßen Haftreduzierungsadditivs während der Compoundierung von PLA-Cellulosefaserverbunden erreicht werden. Das Haftreduzierungsadditiv muss dabei mit den Matrixpolymeren thermodynamisch unverträglich sein.

Mit einer derartigen Kompositzusammensetzung ergeben sich überraschenderweise gleich mehrere Vorteile, insbesondere können durch die Kompositzusammensetzung alle eingangs erwähnten Problematiken simultan gelöst werden. Ein Vorteil der Erfindung liegt darin, dass deutlich höhere Schlagzähigkeiten erreicht werden. Insbesondere in PLA-Cellulosefaserverbunden durch den Zusatz von MAH-g-PP kommt dieser Effekt deutlich zum Tragen. Die Tieftemperaturschlagzähigkeit konnte zudem noch in erheblich höherem Maße verbessert werden (siehe z.B. Tabelle 3 und 4b). Trotz der fehlenden Faser-Matrixkopplung ist der versteifend wirkende Effekt der Cellulosefasern im Verbund nicht aufgehoben, da im energieelastischen Deformationsbereich der Spannungstransfer, von der auf die Faser aufgeschrumpften Matrix, über Oberflächenrauhigkeiten gewährleistet ist (siehe z.B. Tabellen 3 und 4a). Ein weiterer Vorteil besteht darin, dass in Folge der Faser-Hydrophobierung während der Verbundcompoundierung die von der Verarbeitungsmaschine erzeugten Scherkräfte in verträglich geringem Niveau auf die Fasern übertragen werden. Dies begünstigt eine faserschonende Verarbeitung gekennzeichnet durch einen geringeren Faserlängenabbau. Desweiteren verbessert sich durch die reduzierte Faser-Matrix-Interaktion die Fließfähigkeit der Verbunde in der Schmelze, so dass bei einem Formgebungsverfahren bzw. bei der Herstellung von Bauteilen durch z.B. Spritzguss mit geringerem Einspritzdruck gearbeitet werden kann. Ein weiterer positiver Effekt, den die hydrophobierten Cellulosefasern im erfindungsgemäßen Verbund bewirken, ist das stark reduzierte Wasseraufnahmevermögen gegenüber unmodifizierten Cellulosefaserverbunden. Dadurch kann der sonst übliche aufwendige und kostenintensive Trocknungsprozess des Verbundgranulates vor der Weiterverarbeitung z.B. durch Spritzguss eingespart werden. Darüber hinaus zeigen die erfindungsgemäßen Komposite eine erheblich reduzierte Verfärbung (Braunfärbung). Durch die Umhüllung der Cellulosefaser mit dem Haftreduzierungsadditiv wird deren thermisch induzierte Braunfärbung im Komposit nicht mehr sichtbar.

Eine bevorzugte Ausführung des Kompositmaterials sieht vor, dass der mindestens eine thermoplastische Kunststoff der Matrix ausgewählt ist aus der Gruppe bestehend aus
a) Polyolefinen, insbesondere Polyethylen, Polypropylen, Polybutadien, Polyisobutylen und/oder Polybutylen;
b) Polyestern, insbesondere Polyethylenterephthalat (PET), Polybutylenterephthalat (PBT), Polycarbonaten, Polycaprolacton, Polyhydroxybuttersäure (PHB) und/oder Polymilchsäure, z.B. Poly-L-lactid (PLA) Poly-D-lactid (PDLA), Poly-DL-lactid (PDLLA), Polybutylenadipat-terephthalat (PBAT), Polybutylensuccinat-adipat (PBSA) und/oder Polybutylensuccinat (PBS);
c) Polyurethanen; und/oder
d) Polyamiden (PA), insbesondere PA6, PA6.6, PA6.10, PA6.12, PA10, PA11, PA11 und/oder PA12.
Ebenso sind auch Mischungen der zuvor genannten thermoplastischen Kunststoffe bzw. Legierungen und/oder Blends denkbar.

Bevorzugte zahlengemittelte Molekulargewichte des als Matrix verwendeten thermoplastischen Kunststoffs liegen dabei zwischen Mₙ von 1.000 bis 1.000.000 g/mol, bevorzugt von 25.000 bis 250.000 g/mol, besonders bevorzugt von 50.000 bis 100.000 g/mol.

In einer weiteren vorteilhaften Ausführungsform ist das Haftreduzierungsadditiv an die Cellulosefaser durch kovalente Ester-, Ether-, Amid-, Amin-, Urethan- oder Siloxanbindungen und/oder durch nebenvalente Wasserstoffbrückenbindungen gebunden.

Besonders bevorzugte Haftreduzierungsadditive sind dabei ausgewählt aus maleinsäureanhydridgepfropften hydrophoben Polymeren oder Maleinsäureanhydrid enthaltenden Copolymeren, insbesondere maleinsäureanhydridgepfropftem Polyethylen, maleinsäureanhydrid-gepfropftem Polypropylen, maleinsäureanhydrid-gepfropftem Polystyrol, maleinsäureanhydridgepfropftem Polyisobuten, maleinsäureanhydrid-gepfropftem Polyethylen-co-vinylacetat, maleinsäureanhydrid-gepfropftem Polyisobutylen und/oder maleinsäureanhydrid-gepfropftem Polyethylen-co-octan. Ebenso sind mehrere der zuvor genannten Haftreduzierungsadditive als Mischung verwendbar.

Bei einem besonders bevorzugten Additiv handelt es sich um ein Maleinsäureanhydrid gepfropftes Polypropylen (MAH-g-PP/"Fusabond MD353D"), welches gewöhnlich in PP-Naturfaser- bzw. in PP-Cellulosefaserverbunden erfolgreich als Haftvermittler eingesetzt wird und zu einer Verbesserung der Verbundfestigkeit führt (z.B. in Thunwall, Matzinos; Journal of Applied Polymer Science 107; 2007; S. 918-929).

Bevorzugte Pfropfungsgrade (Der Pfropfungsgrad ist das Verhältnis von Masse des gepfropften MAH zur Masse des MAH-g-PP) des maleinsäureanhydridgepfropften hydrophoben Polymers liegen dabei zwischen 0,001 und 90 %, bevorzugt zwischen 0,1 bis 10 %, besonders bevorzugt zwischen 3 und 8.

Vorteilhafte zahlengemittelte Molekulargewichte des Haftreduzierungsadditivs liegen dabei zwischen 100 g/mol und 500.000 g/mol, bevorzugt zwischen 500 und 50.000 g/mol, besonders bevorzugt zwischen 1.000 und 10.000 g/mol.

Eine weitere vorteilhafte Ausführungsform sieht vor, dass der Gewichtsanteil des Verstärkungsstoffs (ohne angebundenes Haftreduzierungsadditiv) bezogen auf die gesamte Kompositzusammensetzung 5 bis 90 Gew.-%, bevorzugt 10 bis 70 Gew.-%, besonders bevorzugt von 10 bis 50 Gew.-% beträgt.

Weiterhin ist vorteilhaft, dass das Haftreduzierungsadditiv (ohne Verstärkungsstoff) bezogen auf die gesamte Kompositzusammensetzung in einem Gewichtsanteil von 0,1 bis 40 Gew.-%, bevorzugt 1 bis 10 Gew.-%, besonders bevorzugt von 1 bis 3 Gew.-% enthalten ist.

Weiter vorteilhaft ist, wenn der Verstärkungsstoff von dem Haftreduzierungsadditiv zumindest teilweise oder vollständig benetzt oder ummantelt ist.

Der in der Kompositzusammensetzung enthaltene Verstärkungsstoff kann dabei vorzugsweise in Form von Fasern, Flocken, Chips und/oder Pulver vorliegen. Durch die Modifikation mit dem Haftreduzierungsadditiv wird jedoch die Morphologie des eingesetzten Verstärkungsstoffes kaum verändert, so dass auch bei entsprechender Modifikation durch das Haftreduzierungsadditiv der Verstärkungsstoff in der zuvor genannten Form in der Kompositzusammensetzung enthalten ist.

Für den Fall, dass der Verstärkungsstoff in Form von Fasern eingesetzt wird, beträgt die vorzugsweise Feinheit dieser Fasern zwischen 0,01 und 18 dtex, bevorzugt zwischen 0,1 und 10 dtex, besonders bevorzugt zwischen 0,8 und 3,4 dtex.

Selbstverständlich können die erfindungsgemäßen Zusammensetzungen auch die üblichen Additive, die in der Kunststoffindustrie Verwendung finden, beinhalten, wie z.B. Pigmente, Farbstoffe, UV- und/oder Lichtstabilisatoren, Flammschutzmittel, Verstärkungsfasern, wie z.B. Glas-, Kohlenstoff- und/oder Aramidfasern etc.

Erfindungsgemäß wird ebenso ein Formkörper bereitgestellt, der eine zuvor beschriebene Kompositzusammensetzung enthält.

Weiter wird erfindungsgemäß ein Verfahren zur Herstellung einer zuvor genannten Kompositzusammensetzung bereitgestellt, bei dem mindestens ein Verstärkungsstoff aus Cellulose sowie mindestens ein Haftreduzierungsadditiv mit einer Matrix, enthaltend mindestens eine Sorte eines thermoplastischen Kunststoffes compoundiert wird.

Die beim Compoundieren ablaufenden Reaktionen werden anhand eines nachfolgenden, nicht einschränkend zu verstehenden Beispiels mit einer PLA-Matrix näher erläutert:
Während der Compoundierung von PLA-Cellulosefaserverbunden in Anwesenheit von MAH-g-PP findet folgender Reaktionsmechanismus statt. Das an die Polypropylen (PP)-Molekülkette gepfropfte Maleinsäureanhydrid (MAH) verestert mit den Hydroxylgruppen der Cellulosefaser unter Bildung von kovalenten Bindungen und interagiert darüber hinaus über Wasserstoffbrückenbindungen. Im Verlaufe der Compoundierung werden so alle eingearbeiteten Fasern, unter der Vorraussetzung hinreichender Vereinzelung, vollständig von MAH-g-PP ummantelt. Folglich wird die Oberfläche der Cellulosefaser vollständig unpolar, da die Hydroxylgruppen der Cellulosefaser in Folge der Polypropylenummantelung gegenüber der PLA-Matrix abgeschirmt werden. Die so während der Compoundierung erreichte, vollständige Hydrophobierung der Cellulosefasern initiiert im abgekühlten erfindungsgemäßen Verbundmaterial bei mechanischer Beanspruchung eine Grenzflächenseparation (Delamination) zwischen Faser und Matrix mit anschließendem reibungsintensiven Faserauszug ("pull out"). Vorrausetzung für die Aktivierung dieser energiedissipierenden Mechanismen ist die thermodynamische Unverträglichkeit von MAH-g-PP mit der PLA-Matrix. Überraschenderweise wird durch die beiden Mechanismen Delamination und "pull out" (Grenzflächenreibung) im Verbund deutlich mehr Schlagenergie dissipiert, als dass das bei vollständiger bzw. partieller Faser-Matrix-Haftung der Fall ist. Ein großer Vorteil besteht darin, dass die energieabsorbierenden Mechanismen Delamination und Faser-"pull out" auch bei sehr geringen Temperaturen (z.B. bei -20 °C und weniger) im erfindungsgemäßen Verbund wirksam werden.

Verwendungszwecke der Kompositzusammensetzung gemäß der vorliegenden Erfindung liegen insbesondere in der Herstellung von Formteilen durch Extrusion, Spritzguss und/oder Pressen; für Bauteile im Automobilbau, Transport- und Verkehrswesen, Bauteile für die Industrieausrüstung, Maschinen- und Anlagenbauteile, Haushaltsgeräte, Behälter, Geräte für die Medizintechnik, Elektrik und/oder Elektronik.

Die vorliegende Erfindung wird anhand der nachfolgenden, nicht einschränkend zu verstehenden Beispiele näher erläutert.

### Beispiel 1

Diskontinuierliche Compoundierung im Innenmischer:
PLA (7000D bottle grade der Fa. NatureWorks) und Celluloseregeneratfasern mit einer Schnittlänge von ca. 4 mm und einem Durchmesser von 12 µm bzw. 1,8 dtex (Cordenka RT 700 der Fa. Cordenka GmbH) wurden getrocknet (PLA: 20 h, 50 °C; Cellulosefaser: 20 h, 95 °C). Anschließend wurden PLA, Cellulosefasern und MAH-g-PP zeitgleich der Knetkammer eines Innenmischers (W 350 der Fa. Brabender) zugeführt. Die Compoundierung erfolgte für 6 Minuten bei einer Massetemperatur von 180-184 °C. Die erzeugten Verbunde wurden nach Entnähme aus der Knetkammer in einen Kunststoffmühle zu Granulat verarbeitet und anschließend in einer Kolbenspritzgussmaschine zu Normprüfkörpern nach DIN EN ISO 527 formgebend verarbeitet. Ausgewählte mechanische Eigenschaften sind in Tabelle 3 zusammengefasst. Die Verdoppelung der Charpy-Kerbschlagzähigkeit (DIN EN ISO 179) auf 9,2 kJ/m² gegenüber dem Verbund ohne MAH-g-PP ist evident.

**Tabelle 3**

| Zusammensetzung PLA/CF/MAH-g-PP | Zugfestigkeit σₘ | E-Modul E | Bruchdehnung εₘ | Kerbschlagzähigkeit a_{cN} bei 23 °C |
|---|---|---|---|---|
| [Masse-%] | [MPa] | [GPa] | [%] | [kJ/m²] |
| 100/0/0 | 68±0,3 | 3,0±0,0 | 3,1±0,09 | 2,5±0,1 |
| 90/10/0 | 75±1,0 (+10%) | 4,0±0,1 (+35%) | 6,3±0,9 (+100%) | 4,7±0,4 (+90%) |
| 87/10/3 | 69±0,3 (+ 2%) | 4,0±0,01 (+35%) | 7,1±0,01 (+130%) | 9,2±0,1 (+270%) |

Durch die Verwendung von MAH-g-PP als Haftreduzierungsadditiv in Cellulosefaserverbunden kann mit Polyhydroxbuttersäure (PHB), Polybutylensuccinat (PBS), Polybutylenadipat-Terephthalat (PBAT) und Polybutylensuccinat-Adipat (PBSA) als Matrixmaterial ebenfalls eine signifikante Steigerung der Kerbschlagzähigkeit erreicht werden (Tabellen 4-7). Dies sind Hinweise dafür, dass sich durch Zugabe eines Haftreduzierungsadditivs generell, also unabhängig von Matrixmaterial, die Verbundkerbschlagzähigkeit a_{cN} von Cellulosefaserverbundmaterialien erhöhen lässt, wobei das hohe Niveau an Verbundsteifigkeit (E-Modul)erhalten bleibt.

**Tabelle 4**

| Zusammensetzung PHB/CF/MAH-g-PP | Zugfestigkeit σₘ | E-Modul E | Bruchdehnung εₘ | Kerbschlagzähigkeit a_{cN} bei | |
|---|---|---|---|---|---|
| | | | | 23 °C | -20°C |
| [Masse-%] | [MPa] | [GPa] | [%] | [kJ/m²) | |
| 100/0/0 | 27,4±0,3 | 1,5±0,0 | 4,0±0,1 | 4,8±0,9 | 1,2±0,1 |
| 80/20/0 | 34,2±2,0 (+25%) | 2,5±0,03 (+65%) | 4,0±0,4 (±0%) | 7,2±0,24 (+50%) | 5,5±0,2 (+350%) |
| 77/20/3 | 36±0,7 (+30%) | 2,6±0,015 (+70%) | 4,5±0,35 (+15%) | 12,0±0,2 (+150%) | 9,50±0,4 (+700%) |

**Tabelle 5**

| Zusammensetzung PBS/CF/MAH-g-PP | Zugfestigkeit σₘ | E-Modul E | Bruchdehnung εₘ | Kerbschlagzähigkeit a_{cN} bei | |
|---|---|---|---|---|---|
| | | | | 23 °C | -20°C |
| [Masse-%] | [MPa] | [GPa] | [%] | [kJ/m²] | |
| 100/0/0 | 40,4±2,5 | 0,7±0,04 | 150,0±105,0 | 4,7±0,2 | 2,2±0,1 |
| 80/20/0 | 58,0±0,6 (+45%) | 2,1±0,03 (+200%) | 8,4±0,3 (-95%) | 13,1±0,1 (+180%) | 10,0±0,6 (+350%) |
| 77/20/3 | 48,0±1,2 (+20%) | 2,2±0,04 (+210%) | 7,5±0,32 (-95%) | 18,0±1,5 (+280%) | 14,0±0,6 (+550%) |

**Tabelle 6**

| Zusammensetzung PBSA/CF/MAH-g-PP | Zugfestigkeit σₘ | E-Modul E | Bruchdehnung εₘ | Kerbschlagzähigkeit a_{cN} bei | |
|---|---|---|---|---|---|
| | | | | 23 °C | -20°C |
| [Masse-%] | [MPa] | [GPa] | [%] | [kJ/m²] | |
| 100/0/0 | 31,0±0,35 | 0,35±0,01 | 250,0±15,0 | 15,7±0,9 | 15,3±0,1 |
| 80/20/0 | 42,2±1,4 (+35%) | 1,7±0,03 (+380%) | 8,2±0,4 (-97%) | 15,0±0,8 (±0%) | 11,4±0,6 (-25%) |
| 77/20/3 | 35,0±0,8 (+10%) | 1,8±0,03 (+400%) | 8,2±0,28 (-97%) | 26,0±1,9 (+80%) | 18,0±1,2 (+20%) |

**Tabelle 7**

| Zusammensetzung PBAT/CF/MAH-g-PP | Zugfestigkeit σₘ | E-Modul E | Bruchdehnung εₘ | Kerbschlagzähigkeit a_{cN} bei | |
|---|---|---|---|---|---|
| | | | | 23 °C | -20°C |
| [Masse-%] | [MPa] | [GPa] | [%] | [kJ/m²] | |
| 100/0/0 | 17,8±0,2 | 0,088±0,004 | 120,0±3,6 | n.b. | n.b. |
| 80/20/0 | 30,2±0,7 (+70%) | 1,0±0,02 (+1000%) | 9,3±0,5 (-95%) | 15,5±1,4 | 18,5±1,0 |
| 77/20/3 | 27,5±1,0 (+65%) | 1,2±0,04 (+1100%) | 9,15±0,33 (-95%) | 30,0±2,5 (+100%) | 24,0±1,2 (+30%) |

| | | | | | |
|---|---|---|---|---|---|
| n.b.: nicht gebrochen | | | | | |

### Beispiel 2

Kontinuierliche Compoundierung mittels Extrusion:
Das PLA (4042D film grade der Fa. NatureWorks) und die endlosen Celluloseregeneratfasern mit einem Durchmesser von 12 µm bzw. 1,8 dtex (Cordenka RT 700 der Fa. Cordenka GmbH) wurden nach dem in WO 03/033227 beschriebenen zweistufigen Pultrusionsverfahren hergestellt. Zehn Stränge der Celluloseregeneratfasern wurden mit einer aufgeschmolzenen Mischung aus PLA und 3 Masse-% MAH-g-PP (Fusabond MD353D der Fa. DSM) mittels einer speziellen Düse und vorgeschalteten Doppelschneckenextruder (ZE 25 der Fa. Berstorft) ummantelt. Der entstandene Strang wurde in einem Wasserbad abgekühlt und anschließend mit einem Granulator (CSG 171 der Fa. Collin GmbH) zu rieselfähigen Pellets der Länge 4 mm geschnitten. Diesem Schritte folgte eine sechsstündige Trocknung des Granulates bei 80 °C. In der zweiten Stufe der erfindungsgemäßen Verbundherstellung wurden die rieselfähigen Pellets erneut dem Extruder (ZE 25 der Fa. Berstorff) zugeführt und über geeignete Misch- und Knetelemente homogenisiert, dann abgezogen und granuliert. Anschließend wurden die homogenisierten und rieselfähigen Pellets mittels einer Spritzgussmaschine (Allrounder M500-90 der Fa. Arburg) zu Normprüfkörpern nach DIN EN ISO 527 verarbeitet. Ausgewählte mechanische Eigenschaften der so hergestellten erfindungsgemäßen Verbunde sind in Tabelle 8a und 8b zusammengefasst.

**Tabelle 8a**

| Zusammensetzung PLA/CF/MAH-g-PP | Zugfestigkeit σₘ | E-Modul E | Bruchdehnung εₘ |
|---|---|---|---|
| [Masse-%] | [MPa] | [GPa] | [%] |
| 100/0/0 | 75±0,2 | 2,8±0,2 | 3,9±0,2 |
| 80/20/0 | 104±1,7 (+40%) | 4,3±0,1 (+55%) | 5,8±0,4 (+50%) |
| 77/20/3 | 85±1,5 (+15%) | 4,3±0,01 (+55%) | 8,2±0,5 (+110%) |

**Tabelle 8b**

| Zusammensetzung PLA/CF/MAH-g-PP | Schlagzähigkeit | Kerbschlagzähigkeit | Schlagzähigkeit | Kerbschlagzähigkeit |
|---|---|---|---|---|
| | a_{c} bei 23 °C | a_{cN} bei 23 °C | a_{c} bei -20 °C | a_{cN} bei -20 °C |
| [Masse-%] | [kJ/m²] | [kJ/m²] | [kJ/m²] | [kJ/m²] |
| 100/0/0 | 20±3,0 | 2,6±0,2 | 16±4,0 | 2,8±0,5 |
| 80/20/0 | 63,5±3,0 (+220%) | 8,0±1,0 (+200%) | 47,3±5,7 (+200%) | 6,0±1,0 (+1108) |
| 77/20/3 | 88,1±4,0 (+340%) | 25,4±1,4 (+880%) | 93,2±3,4 (+480%) | 19,0±0,3 (+580%) |

Wie im ersten Beispiel ist die Schlagzähigkeit deutlich erhöht. Die Werte für die gekerbte Schlagzähigkeit verdreifachen sich im Vergleich zu den Verbunden ohne MAH-g-PP, sowohl bei Raumtemperatur als auch bei -20°C. Die ungekerbten Schlagzähigkeiten weisen Zuwächse von 38 % bei Raumtemperatur und fast 100 % bei -20°C auf.

Die Beispiele 1 und 2 zeigen, dass die erfindungsgemäßen Verbundmaterialien ohne weiteres durch konventionelle, industrierelevante Verarbeitungstechnologien schnell, kostengünstig und reproduzierbar herstellbar sind. Darüberhinaus ist die Verfügbarkeit aller dafür eingesetzten Ausgangsmaterialien gegeben. Die erfindungsgemäßen Verbundmaterialien bestehen zu 97 % aus einer biobasierenden, nachwachsenden, rohstofflichen Basis, welche völlig unproblematisch recycelt bzw. entsorgt werden können.

Der erzeugte erfindungsgemäße Verbund nach Beispiel 2 weist ein mechanisches Eigenschaftsniveau auf, welches jenes von kurzglasfaserverstärkten Polypropylen (PP/GF), bezüglich Festigkeit und Steifigkeit Schlagzähigkeit und Tieftemperaturschlagzähigkeit, bei Weitem übertrifft (Tabelle 9). Zudem ist auf die Vorteile bei der Verwendung von Cellulose gegenüber Glasfasern, wie geringere Dichte (1,5 gg 2,5 g/cm³) und geringe Abrasivität der Verarbeitungsmaschinen, hinzuweisen.

**Tabelle 9**

| Material | E-Modul | Zugfestigkeit | Bruchdehnung | Schlagzähigkeit a_{c} bei 23°C | Kerbschlagzähigkeit a_{cN} bei 23 °C | Schlagzähigkeit a_{c} bei -20 °C | Kerbschlagzähigkeit a_{cN} bei -20 °C |
|---|---|---|---|---|---|---|---|
| | [GPa] | [MPa] | [%] | [kJ/m²] | [kJ/m²] | [kJ/m²] | [kJ/m²] |
| PLA/CF/MAH-g-PP | 4,3 | 84 | 8,2 | 88,1 | 25,4 | 93,2 | 19,0 |
| PP/GF* | 3,5 | 57 | 5,1 | 41 | 15,6 | 48 | 10,5 |
| PC/ABS** | 2,1 | 50 | >50 | n.b. | 42 | n.b. | 36 |

| | | | | | | | |
|---|---|---|---|---|---|---|---|
| * Piolen PO20CA67; Herstellerangaben ** Bayblend T45; Herstellerangaben n.b. nicht gebrochen | | | | | | | |

Der erzeugte erfindungsgemäße Verbund nach Beispiel 2 weist ein mechanisches Eigenschaftsniveau auf, welches jenes von PC/ABS-Blends bezüglich Festigkeit und Steifigkeit bei Weitem übertrifft und lediglich bezüglich der Schlagzähigkeit und Tieftemperaturschlagzähigkeit noch nicht vollständig erreicht hat (Tabelle 9). In Hinblick auf die Möglichkeit die Faseranteile in den erfindungsgemäßen Verbundmaterial auf bis zu 45 Masse-% zu erhöhen, was durchaus möglich ist, wie Fink und Ganster in Macromol. Symp. 244 (2006) gezeigt haben, erscheint es realistisch die mechanischen Eigenschaftskennwerte hinsichtlich Schlagzähigkeit und Tieftemperaturschlagzähigkeit von PC/ABS-Blends zu erreichen. Eine weitere Möglichkeit den erfindungsgemäßen Verbund bezüglich der Schlagzähigkeit zu optimieren besteht darin, eine Faser mit einem geringeren Durchmesser z.B. mit einem Titer von 0,8 dtex zu verwenden. Bei gleichen Faseranteilen erhöht sich somit die hydrophobierte Faseroberfläche im Verbund, wodurch mehr Energie durch Grenzflächenseparation und Grenzflächenreibung bei schlagartiger Beanspruchung im erfindungsgemäßen Verbund dissipiert wird.

## Patentansprüche

1. Kompositzusammensetzung, enthaltend
a) eine Matrix, enthaltend mindestens einen thermoplastischen Kunststoff, wobei der mindestens eine thermoplastische Kunststoff ausgewählt ist aus der Gruppe bestehend aus Polyestern,
b) mindestens einen Verstärkungsstoff aus Cellulosefasern, sowie
c) mindestens ein kovalent und/oder nebenvalent an die Cellulose angebundenes Haftreduzierungsadditiv,
**dadurch gekennzeichnet, dass** das Haftreduzierungsadditiv mit dem thermoplastischen Kunststoff der Matrix thermodynamisch unverträglich ist und ein maleinsäureanhydridgepfropftes hydrophobes Polymer oder ein Maleinsäureanhydrid enthaltendes Copolymer oder eine Mischung aus mehreren der zuvor genannten Haftreduzierungsadditive ist,
**dadurch gekennzeichnet, dass**
das zahlengemittelte Molekulargewicht des Haftreduzierungsadditivs zwischen 500 g/mol und 10.000 g/mol und der Verstärkungsstoff von dem Haftreduzierungsadditiv zumindest teilweise oder vollständig benetzt oder ummantelt ist, wobei die Feinheit der Cellulosefasern zwischen 0,01 und 18 dtex beträgt.

2. Kompositmaterial nach vorhergehendem Anspruch 1, **dadurch gekennzeichnet, dass** der mindestens eine thermoplastische Kunststoff ausgewählt ist aus der Gruppe bestehend aus Polymilchsäure, z.B. Poly-L-lactid (PLLA), Poly-D-lactid (PDLA), Poly-DL-lactid (PDLLA), Polyethylenterephthalat (PET), Polybutylenterephthalat (PBT), Polycarbonat (PC), Polycaprolacton, Polyhydroxybuttersäure (PHB), Polybutylenadipat-terephthalat (PBAT), Polybutylensuccinat-adipat (PBSA) und Polybutylensuccinat (PBS).

3. Kompositzusammensetzung nach einem der vorhergehenden Ansprüche, **dadurch gekennzeichnet, dass** der thermoplastische Kunststoff ein zahlengemitteltes Molekulargewicht Mₙ von 1.000 bis 1.000.000 g/mol, bevorzugt von 25.000 bis 250.000 g/mol, besonders bevorzugt von 50.000 bis 100.000 g/mol aufweist.

4. Kompositzusammensetzung nach einem der vorhergehenden Ansprüche, **dadurch gekennzeichnet, dass** das Haftreduzierungsadditiv an die Cellulosefaser durch kovalente Ester-, Ether-, Amid-, Amin-, Urethan- oder Siloxanbindungen und/oder durch nebenvalente Wasserstoffbrückenbindungen gebunden ist.

5. Kompositzusammensetzung nach einem der vorhergehenden Ansprüche, **dadurch gekennzeichnet, dass** das Haftreduzierungsadditiv ein maleinsäureanhydridgepfropftes Polyethylen, maleinsäureanhydridgepfropftes Polypropylen, maleinsäureanhydridgepfropftes Polystyrol, maleinsäureanhydridgepfropftes Polyisobuten, maleinsäureanhydridgepfropftes Polyethylen-co-vinylacetat, maleinsäureanhydridgepfropftes Polyisobutylen und/oder maleinsäureanhydrid-gepfropftes Polyethylen-co-octan oder eine Mischung aus mehreren der zuvor genannten Haftreduzierungsadditive ist.

6. Kompositzusammensetzung nach vorhergehendem Anspruch, **dadurch gekennzeichnet, dass** der Pfropfungsgrad des Maleinsäureanhydridgepfropften hydrophoben Polymers zwischen 0,001 und 90 %, bevorzugt zwischen 0,1 und 10 %, besonders bevorzugt zwischen 3 und 8 % beträgt.

7. Kompositzusammensetzung nach einem der vorhergehenden Ansprüche, **dadurch gekennzeichnet, dass** der Verstärkungsstoff bezogen auf die gesamte Kompositzusammensetzung in einem Gewichtsanteil von 5 bis 90 Gew.-%, bevorzugt 10 bis 70 Gew.-%, besonders bevorzugt von 10 bis 50 Gew.-% enthalten ist.

8. Kompositzusammensetzung nach einem der vorhergehenden Ansprüche, **dadurch gekennzeichnet, dass** das Haftreduzierungsadditiv bezogen auf die gesamte Kompositzusammensetzung in einem Gewichtsanteil von 0,1 bis 40 Gew.-%, bevorzugt 1 bis 10 Ges.-%, besonders bevorzugt von 1 bis 3 Gew.-% enthalten ist.

9. Kompositzusammensetzung nach einem der vorhergehenden Ansprüche, **dadurch gekennzeichnet, dass** der Verstärkungsstoff in Form von Fasern, Flocken, Chips und/oder Pulver enthalten ist.

10. Kompositzusammensetzung nach vorhergehendem Anspruch, **dadurch gekennzeichnet, dass** die Feinheit der Fasern zwischen 0,1 und 10 dtex, besonders bevorzugt zwischen 0,8 und 3,4 dtex, beträgt.

11. Formkörper, enthaltend eine Kompositzusammensetzung nach einem der vorhergehenden Ansprüche.

12. Verfahren zur Herstellung einer Kompositzusammensetzung nach einem der Ansprüche 1 bis 10, bei dem mindestens ein Verstärkungsstoff aus Cellulose sowie mindestens ein Haftreduzierungsadditiv mit einer Matrix, enthaltend mindestens eine Sorte eines thermoplastischen Kunststoffes kompoundiert werden.

13. Verwendung der Kompositzusammensetzung gemäß einem der Ansprüche 1 bis 10 zur Herstellung von Formteilen durch Extrusion, Spritzguss und/oder Pressen; für Bauteile im Automobilbau, Transport- und Verkehrswesen, Bauteile für die Industrieausrüstung, Maschinen- und Anlagenbauteile, Haushaltsgeräte, Behälter, Geräte für die Medizintechnik, Elektrik und/oder Elektronik.

## Claims

1. Composite composition containing
a) a matrix containing at least one thermoplastic, wherein the at least one thermoplastic is selected from the group consisting of polyesters,
b) at least one reinforcing substance of cellulose fibres, and
c) at least one adhesion-reducing additive bonded covalently and/or via secondary valencies to the cellulose,
**characterised in that** the adhesion-reducing additive is thermodynamically incompatible with the thermoplastic of the matrix and is a hydrophobic polymer grafted with maleic anhydride or a copolymer containing maleic anhydride or a mixture of several of the abovementioned adhesion-reducing additives,
**characterised in that**
the number-average molecular weight of the adhesion-reducing additive is between 500 g/mol and 10,000 g/mol and the reinforcing substance is at least partially or completely wetted or sheathed by the adhesion-reducing additive, wherein the fineness of the cellulose fibres is between 0.01 and 18 dtex.

2. Composite material according to the preceding claim, **characterised in that** the at least one thermoplastic is selected from the group consisting of polylactic acid, e.g. poly-L-lactide (PLLA), poly-D-lactide (PDLA), poly-DL-lactide (PDLLA), polyethylene terephthalate (PET), polybutylene terephthalate (PBT), polycarbonate (PC), polycaprolactone, polyhydroxybutyric acid (PHB), polybutylene adipate terephthalate (PBAT), polybutylene succinate-adipate (PBSA) and polybutylene succinate (PBS).

3. Composite composition according to one of the preceding claims, **characterised in that** the thermoplastic has a number-average molecular weight Mₙ of from 1,000 to 1,000,000 g/mol, preferably from 25,000 to 250,000 g/mol, particularly preferably from 50,000 to 100,000 g/mol.

4. Composite composition according to one of the preceding claims, **characterised in that** the adhesion-reducing additive is bonded to the cellulose fibres by covalent ester, ether, amide, amine, urethane or siloxane bonds and/or by hydrogen bridge bonds of secondary valency.

5. Composite composition according to one of the preceding claims, **characterised in that** the adhesion-reducing additive is a polyethylene grafted with maleic anhydride, polypropylene grafted with maleic anhydride, polystyrene grafted with maleic anhydride, polyisobutene grafted with maleic anhydride, polyethylene-co-vinyl acetate grafted with maleic anhydride, polyisobutylene grafted with maleic anhydride and/or polyethylene-co-octane grafted with maleic anhydride or a mixture of several of the abovementioned adhesion-reducing additives.

6. Composite composition according to the preceding claim, **characterised in that** the degree of grafting of the hydrophobic polymer grafted with maleic anhydride is between 0.001 and 90 %, preferably between 0.1 and 10 %, particularly preferably between 3 and 8 %.

7. Composite composition according to one of the preceding claims, **characterised in that** the reinforcing substance is contained therein, based on the total composite composition, in a weight content of from 5 to 90 wt.%, preferably 10 to 70 wt.%, particularly preferably from 10 to 50 wt.%.

8. Composite composition according to one of the preceding claims, **characterised in that** the adhesion-reducing additive is contained therein, based on the total composite composition, in a weight content of from 0.1 to 40 wt.%, preferably 1 to 10 wt.%, particularly preferably from 1 to 3 wt.%.

9. Composite composition according to one of the preceding claims, **characterised in that** the reinforcing substance is contained therein in the form of fibres, flocks, chips and/or powder.

10. Composite composition according to the preceding claim, **characterised in that** the fineness of the fibres is between 0.1 and 10 dtex, particularly preferably between 0.8 and 3.4 dtex.

11. Moulded body containing a composite composition according to one of the preceding claims.

12. Method for the production of a composite composition according to one of claims 1 to 10, in which at least one reinforcing substance of cellulose and at least one adhesion-reducing additive are compounded with a matrix containing at least one variety of a thermoplastic.

13. Use of the composite composition according to one of claims 1 to 10 for the production of moulded parts by extrusion, injection moulding and/or compression moulding; for components in automobile construction, in the traffic and transport industry, components for industrial equipment, machinery and plant components, domestic appliances, containers, equipment for medical technology, electrical engineering and/or electronics.

## Revendications

1. Composition composite, contenant
a) une matrice contenant au moins une matière plastique thermoplastique, dans laquelle l'au moins une matière plastique thermoplastique est choisie dans le groupe consistant en les polyesters,
b) au moins un matériau de renforcement, constitué de fibres de cellulose, ainsi que
c) au moins un additif réducteur d'adhérence, lié par liaison covalente et/ou de valence secondaire à la cellulose,
**caractérisée en ce que** l'additif réducteur d'adhérence présente une incompatibilité thermodynamique avec la matière plastique thermodynamique de la matrice, et est un polymère hydrophobe à greffage anhydride maléique ou un copolymère contenant de l'anhydride maléique ou un mélange de plusieurs des additifs réducteurs d'adhérence mentionnés ci-dessus,
**caractérisée en ce que**
la masse moléculaire moyenne en nombre de l'additif réducteur d'adhérence est comprise entre 500 g/mol et 10 000 g/mol, et le matériau de renforcement est, au moins en partie, ou complètement, mouillé ou gainé, la finesse des fibres de cellulose étant comprise entre 0,01 et 18 dtex.

2. Matériau composite selon la revendication précédente, **caractérisé en ce que** l'au moins une matière plastique thermoplastique est choisie dans le groupe consistant en le poly(acide lactique), p.ex. le poly-L-lactide (PLLA), le poly-D-lactide (PDLA), le poly-DL-lactide (PDLLA), le poly(téréphtalate d'éthylène) (PET), le poly(téréphtalate de butylène) (PBT), le polycarbonate (PC), la polycaprolactone, le poly(acide hydroxybutyrique) (PHB), le poly(adipate et téréphtalate de butylène) (PBAT), le poly(succinate et adipate de butylène) (PBSA) et le poly(succinate de butylène) (PBS).

3. Composition composite selon l'une des revendications précédentes, **caractérisée en ce que** la matière plastique thermoplastique présente une masse moléculaire moyenne en nombre Mₙ de 1000 à 1 000 000 g/mol, de préférence de 25 000 à 250 000 g/mol, d'une manière particulièrement préférée de 50 000 à 100 000 g/mol.

4. Composition composite selon l'une des revendications précédentes, **caractérisée en ce que** l'additif réducteur d'adhérence est lié aux fibres de cellulose par des liaisons covalentes ester, éther, amide, amine, uréthanne ou siloxane, et/ou par des liaisons à pont hydrogène de valence secondaire.

5. Composition composite selon l'une des revendications précédentes, **caractérisée en ce que** l'additif réducteur d'adhérence est un polyéthylène à greffage anhydride maléique, un polypropylène à greffage anhydride maléique, un polystyrène à greffage anhydride maléique, un polyisobutène à greffage anhydride maléique, un poly(éthylène-co-acétate de vinyle) à greffage anhydride maléique, un polyisobutylène à greffage anhydride maléique et/ou un poly(éthylène-co-octane) à greffage anhydride maléique, ou un mélange de plusieurs des additifs réducteurs d'adhérence mentionnés ci-dessus.

6. Composition composite selon la revendication précédente, **caractérisée en ce que** le taux de greffage du polymère hydrophobe à greffage anhydride maléique est compris entre 0,001 et 90 %, de préférence entre 0,1 et 10 %, d'une manière particulièrement préférée entre 3 et 8 %.

7. Composition composite selon l'une des revendications précédentes, **caractérisée en ce que** le matériau de renforcement est présent selon une proportion en poids, par rapport à la composition composite totale, de 5 à 90 % en poids, de préférence de 10 à 70 % en poids, d'une manière particulièrement préférée de 10 à 50 % en poids.

8. Composition composite selon l'une des revendications précédentes, **caractérisée en ce qu'**elle contient l'agent réducteur d'adhérence selon une proportion pondérale, rapportée à la composition composite totale, de 0,1 à 40 % en poids, de préférence de 1 à 10 % en poids, d'une manière particulièrement préférée de 1 à 3 % en poids.

9. Composition composite selon l'une des revendications précédentes, **caractérisée en ce qu'**elle contient le matériau de renforcement sous forme de fibres, de flocs, de copeaux et/ou de poudres.

10. Composition composite selon la revendication précédente, **caractérisée en ce que** la finesse des fibres est comprise entre 0,1 et 10 dtex, d'une manière particulièrement préférée entre 0,8 et 3,4 dtex.

11. Objet moulé, contenant une composition composite selon l'une des revendications précédentes.

12. Procédé de fabrication d'une composition composite selon l'une des revendications 1 à 10, dans lequel un matériau de renforcement constitué de cellulose, ainsi qu'au moins un additif réducteur d'adhérence à une matrice contenant au moins une espèce de matière plastique thermoplastique, sont mélangés.

13. Utilisation de la composition composite selon l'une des revendications 1 à 10 pour la fabrication d'objets moulés par extrusion, moulage par injection et/ou pressage ; pour des composants en construction automobile, dans le transport et la circulation, pour les composants pour les équipements industriels, les composants de machines et d'installations, les appareils ménagers, les récipients, les instruments pour la technique médicale, l'électricité et/ou l'électronique.
